**Europäisches Patentamt**

**European Patent Office**

**Office européen des brevets**

(19)

(11) Veröffentlichungsnummer: **0 185 273**

**B1**

(12) **EUROPÄISCHE PATENTSCHRIFT**

(45) Veröffentlichungstag der Patentschrift:
27.04.88

(21) Anmeldenummer: 85115542.4

(22) Anmeldetag: 06.12.85

(51) Int. Cl.⁴: **B 65 G 53/60**

(54) Saugheber.

(30) Priorität: 15.12.84 DE 3445819

(43) Veröffentlichungstag der Anmeldung:
25.06.86 Patentblatt 86/26

(45) Bekanntmachung des Hinweises auf die Patenterteilung:
27.04.88 Patentblatt 88/17

(84) Benannte Vertragsstaaten:
CH DE FR GB IT LI NL SE

(56) Entgegenhaltungen:
DE-A-2 531 638
GB-A-1 268 001

(73) Patentinhaber: Bühler- MIAG GmbH, Ernst- Amme-
Strasse 19, D-3300 Braunschweig (DE)

(72) Erfinder: Heckel, Hans, Emil- Berg- Strasse 7,
D-3302 Cremlingen (DE)

## Beschreibung

Die Erfindung betrifft einen Saugheber mit einer schwenkbeweglichen Förderleitung, in der das Gut von einer Gutaufnahmevorrichtung mittels eines Saugluftstromes zu einem Rezipienten transportiert wird, der Gut und Förderluft nach erfolgtem Transport voneinander scheidet, wobei die Förderleitung direkt in den Rezipienten mündet und vor ihrer Austrittsöffnung in diesem eine Prallfläche vorgesehen ist, die den gesamten Schwenkbereich der Austrittsöffnung abdeckt.

Bei der angesprochenen Gattung Saugheber vom Stand der Technik mündet die Förderleitung mit krasser Querschnittsveränderung in den Rezipienten und wird die Prallfläche von einem innen im Rezipienten angebrachten Prallschild mit gewölbtem Querschnitt gebildet, der dem Schwenkweg der Austrittsöffnung der Förderleitung durch eine entsprechend gekrümmte oder vieleckige Form angenähert ist. Die plötzliche große Querschnittsveränderung am Übergang zwischen Förderleitung einerseits und Rezipient andererseits ergibt aufgrund des großen Strömungswiderstandes einen hohen aerodynamischen Verlustbeiwert; die unvollkommene Umlenkung des Förderstromes am Prallschild verursacht Turbulenzen und sogenanntes Spritzkorn, was in nachteiliger Weise zu einer Wiederaufwirbelung des herabfallenden Filterstaubes führt, die in den Rezipienten hineinragenden Filterschläuche der Filteranlage durch Spritzkornbeschuß schädigt sowie einen großflächigen Schleißschutz an der tragenden Gehäusewand erforderlich macht. Der Prallschild ist ein schweres und damit teures Bauteil, weil er den gesamten Schwenkweg der Förderleitungsaustrittsöffnung abdecken muß; aufgrund des schrägen Anströmens unterliegt er hohem Verschleiß, außerdem mindert er den freien Querschnitt des Steigschachtes und stellt dadurch die für ein optimales Vorabscheiden des groben Staubes erwünschte niedrige Steiggeschwindigkeit der Staubluft in Frage. Wie aus Vorstehendem erhellt, ist die bekannte Saugheberausbildung mit mehreren ins Gewicht fallenden Mängeln behaftet, die für den praktischen Betrieb eines solchen Fördergerätes ungünstig sind.

Der Erfindung liegt die Aufgabe zugrunde, Saugheber der eingangs genannten Art dahingehend zu verbessern, daß mit einem kleinstmöglichen Förderleitungsverlust das Gut aus dem Förderstrom abgebremst und geführt nach unten in den Sammeltrichter des Rezipienten ohne Bilden von Spritzkorn frei ausfallen kann und die Steiggeschwindigkeit der Staubluft im Rezipienten zuverlässig unter die Schwebegeschwindigkeit der gröberen Gutteilchen herabgesetzt wird.

Erfindungsgemäß ist diese Aufgabe dadurch gelöst, daß als Prallfläche im Rezipienten ein kastenförmiger Prallkopf an die Förderleitung angesetzt und mit ihr beweglich ist. Nach der weiteren Erfindung besteht der Prallkopf aus zwei in Richtung der Förderleitung verlaufenden Längswänden und einer quer zu dieser sich erstreckenden, die eigentliche Prallfläche bildenden Querwand sowie einem Satteldach, ist unten offen und an einer Seite von einer quer zur Förderleitung gerichteten und mit ihr verbundenen Wand abgedichtet, durch die hindurch die Förderleitung einmündet, wobei er nach einem anderen Erfindungsmerkmal in Richtung des Förderstromes diffusorartig erweitert ist. Aufgrund dieser erfindungsgemäßen Formgebung wird der aus der Förderleitung in den Prallkopf einströmende Förderluft-Gut-Strom verzögert, so daß hierdurch bereits ein Anteil des geförderten Gutes unter Schwerkraftwirkung den Förderluftstrom verläßt und in den Sammeltrichter des Rezipienten fällt; der im Förderluftstrom durch sein Beharrungsvermögen verbleibende, in der ursprünglichen Bewegungsrichtung weiterfliegende Gutanteil trifft auf die Prallwand und wird von dieser auf Geschwindigkeit 0 abgebremst und fällt ebenfalls durch Schwerkraft aus dem Förderluftstrom heraus in den Sammeltrichter. Der den Prallkopf zunächst gleichfalls nach unten verlassende Förderluftstrom wird durch die Sogwirkung aus der oben im Rezipienten befindlichen Filteranlage nach oben umgelenkt und strömt aufgrund des großen freien Querschnitts des Rezipienten mit einer unter Schwebegeschwindigkeit liegenden. Steiggeschwindigkeit aufwärts in die Filteranlage, wobei die im Luftstrom noch enthaltenen gröberen Staubteilchen nun auch ausfallen und lediglich Feinstaub mit dem Luftstrom als Rohgasstrom in die Filteranlage gelangt. Bei dem späteren Abreinigen der Filterschläuche der Filteranlage gewährleistet das erfindungsgemäß vorgesehene Satteldach des Prallkopfes, daß der als fladenförmige Zusammenballungen herabfallende Filterstaub sich nicht auf dem Prallkopf ablagern kann.

Um bei stark schleißenden Gütern den am meisten beanspruchten Teil des Prallkopfes einfach und in kurzer Zeit austauschen zu können und seine Seitenwände im Sinne langer Lebensdauer zu schützen, sind in weiterer Ausgestaltung die als Prallfläche dienende Querwand des Prallkopfes auswechselbar angeordnet und seine beiden Längswände mit einem Verschleißschutz versehen.

Nach der weiteren Erfindung ist der Prallkopf auf einer an der Förderleitung gelagerten Achse angeordnet und nach oben schwenkbeweglich und ist an der Förderleitung ein Widerlager angebracht, welches seine Bewegung in der Gegenrichtung sperrt; hierdurch wird zum einen ein Schwenken der Förderleitung bis zu einem bestimmten Füllungsgrad des Rezipienten ermöglicht, ohne daß der Prallkopf samt Förderleitung beim Eintauchen in den im Sammeltrichter befindlichen Guthaufen deformiert wird, und zum anderen die Schwenkachse der Förderleitung im Sinne von Bauhöhen- und Saughöhenminimierung nahe an den Sammeltrichter des Rezipienten herangerückt. Wenn dabei nach einem anderen Erfindungsmerkmal die Schwenkachse des Prallkopfes unterhalb der Längsachse der Förderleitung angeordnet wird, bewirkt die Aufprallkraft des Förderstromes auf die Prallwand ein abwärtsgerichtetes Drehmoment, welches den Prallkopf ständig gegen sein Widerlager an der Förderleitung drückt, so daß er durch dieses Drehmoment und sein Eigengewicht immer in seiner Arbeitsstellung gehalten und beim Auslenken aus dieser durch äußere Kräfte selbsttätig in die Arbeitsstellung wieder zurückgeführt wird.

In der Zeichnung ist ein Ausführungsbeispiel des Saughebers nach der Erfindung wiedergegeben, das im nachfolgenden näher erläutert wird. Es zeigen:

Figur 1    teilweise einen Längsschnitt durch die Säule des Saughebers in schematischer Darstellung,

Figur 2    einen Querschnitt durch die Säule nach Linie II-II in Figur 1,

Figur 3    einen Querschnitt durch die Förderleitung nach Linie III-III in Figur 1 im größeren Maßstab und

Figur 4    ein en der Figur 1 entsprechenden Teil-Längsschnitt durch die Saughebersäule mit einer anderen Arbeitsstellung der Förderleitung und infolge Störfalles mit Gut vollgelaufenem Sammeltrichter des Rezipienten.

Die zylindrische Drehsäule 1 des nicht weiter veranschaulichten Saughebers nimmt in ihrem Inneren in Übereinanderanordnung einen Rezipienten 2 sowie eine Filteranlage 3 auf, wobei die Wand 4 der Drehsäule 1 gleichzeitig für beide das Gehäuse bildet. Der Rezipient 2 wird durch einen Zwischenboden 5 von einer Reinluftkammer 6 getrennt, die in bekannter Weise mit einem nicht dargestellten Sauggebläse als Unterdruckerzeuger verbunden ist. Der Rezipient 2 besitzt unten einen Sammeltrichter 7 und als Austragsvorrichtung für das Gut eine Zellenradschleuse 8. Die Filteranlage 3 umfaßt mehrere Filtereinheiten bestehend je aus mehreren Filterelementgruppen 9 mit einer Anzahl je aus einem Filterkorb und einem Filterschlauch gebildeter Filterelemente 10, welche lösbar am Zwischenboden 5 fixiert sind. Die Gutaufnahmevorrichtung und Rezipient 2 miteinander verbindende Förderleitung 11 ist mit Hilfe eines Schwenkgelenkes 12 vakuum- und regendicht in den Rezipienten 2 hineingeführt und mit diesem verbunden sowie um eine Achse 13 schwenkbeweglich; sie wird in bekannter Weise von einem nicht dargestellten, schwenkbaren Ausleger aufgenommen. Das Schwenkgelenk 12 ist durch eine elastische Dichtung 14 abgedichtet.

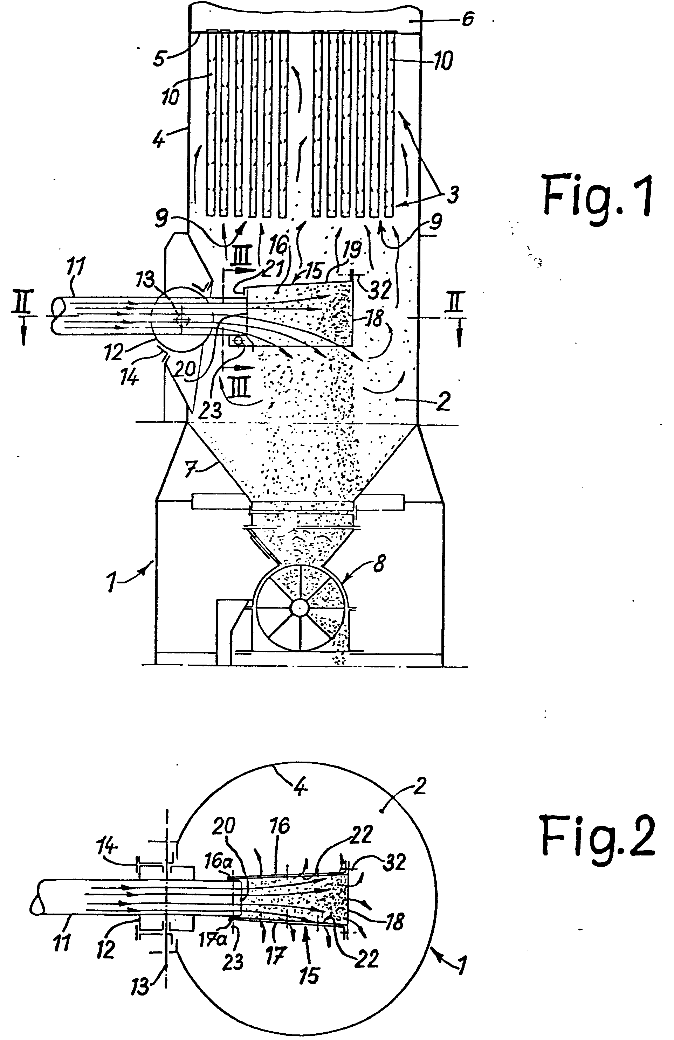

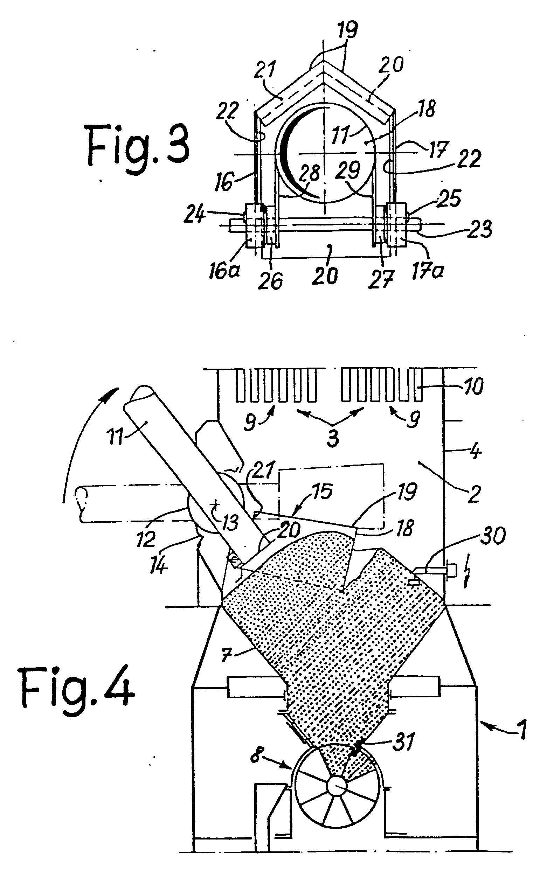

Auf dem in den Rezipienten 2 ragenden Ende der Förderleitung 11 ist ein gemeinsam mit ihr beweglicher, kastenförmiger Prallkopf 15 vorgesehen und schwenkbeweglich an ihr angeordnet. Der Prallkopf 15 wird gebildet von zwei in Richtung der Förderleitung 11 verlaufenden Längswänden 16, 17, einer quer zur Förderleitung 11 sich erstreckenden Querwand 18 sowie einem Satteldach 19. Die der Förderleitung 11 zugekehrte Seite des Prallkopfes 15 wird von einer weiteren quer zur ersteren gerichteten Wand 20 abgedeckt, welche fest mit ihr verbunden ist. Durch die Wand 20 hindurch mündet die Förderleitung 11 in den Prallkopf 15. Förderleitungsseitig und parallel zur Wand 20 ist am Prallkopf 15 eine seinem Satteldach 19 angepaßte und mit diesem verschweißte Anschlagleiste 21 vorgesehen. Die Querwand 18 bildet die eigentliche Prallwand und ist entsprechend bemessen, Schrauben 32 verbinden sie lösbar mit den Längswänden 16, 17 und dem Satteldach 19. Die Längswände 16, 17 sind auf ihrer Innenseite mit Schleißplatten 22 besetzt und jede von ihnen weist einen Lageransatz 16a bzw. 17a auf, mit dessen Hilfe sie und damit der Prallkopf 15 auf einer Achse 23 gelagert ist; Achshalter 24, 25 verbinden die Lageransätze 16a, 17a drehfest mit der Achse 23. Die Achse 23 selbst wird drehbeweglich von zwei Augenlägern 26, 27 aufgenommen, welche an zwei mit der Förderleitung 11 verschweißten Seitenwangen 28, 29 befestigt sind (Fig. 3). Die Seitenwände 16, 17 einerseits und das Satteldach 19 andererseits sind außerde.n so geformt bzw. bemessen, daß - wie die Fig. 1 und 2 erkennen lassen - der Prallkopf 15 sich in Richtung des Förderstromes diffusorartig erweitert.

Als Sicherheitsorgan ist oberhalb des Sammeltrichters 7 im Rezipienten 2 ein mechanischer Füllstandsmelder 30 (Fig. 4) angeordnet, der die Förderung unterbricht, wenn der Guthaufen im Sammeltrichter 7 ein vorgegebenes Niveau erreicht, beispielsweise weil die Zellenradschleuse 8 durch einen Fremdkörper 31 blockiert ist.

Die Wirkungsweise des Prallkopfes ist kurz wie folgt: Durch den im Betrieb des Saughebers von seinem Sauggebläse erzeugten Unterdruck wird das Gut, beispielsweise Getreide, mittels der Gutaufnahmevorrichtung aufgenommen, zum Beispiel mit einer Saugdüse angesaugt, und durch die Förderleitung 11 in Richtung Rezipient 2 gefördert. Bei Eintritt des Förderstromes in den Prallkopf 15 nimmt seine Geschwindigkeit aufgrund der diffusorartigen Erweiterung ab, wodurch ein Teil der geförderten Getreidekörner unter der Wirkung der Gravitation aus dem Förderluftstrom heraus in den Sammeltrichter 7 des Rezipienten 2 fällt. Soweit Getreidekörner durch ihr Beharrungsvermögen im Förderluftstrom verbleiben und in der ursprünglichen Bewegungsrichtung weiterfliegen, prallen sie auf die Querwand 18 des Prallkopfes 15, werden von dieser abgestoppt (Geschwindigkeit 0) und fallen durch Schwerkraftwirkung aus dem Förderluftstrom heraus in den Sammeltrichter 7. Bei diesem Vorgang verhindern die Wände 16, 17, 18, 20 und das Satteldach 19 des Prallkopfes 15 jegliches Bilden von die Filterschläuche der Filterelemente 10 schädigendem Spritzkorn. Durch die Querwand 18 wird der Luftstromumgelenkt und strömt aus dem Prallkopfinneren zunächst nach unten, wird dann aber durch Sogwirkung aus der Filteranlage 3 nach oben umgelenkt, wobei er infolge des großen freien Querschnitts des Rezipienten 2 noch weiter in seiner Geschwindigkeit vermindert wird, so daß er nun mit einer unter Schwebegeschwindigkeit liegenden Steiggeschwindigkeit aufwärts in Richtung Filteranlage 3 bzw. Filterelemente 10 strömt; dabei fallen die vom Luftstrom mitgeschleppten gröberen Staubteilchen aus, so daß nur noch feinere Staubteilchen mit dem Luftstrom in die Filteranlage 3 gesaugt werden und sich an deren Filterelementen 10 anlagern.

Das aus dem Förderstrom ausgeschiedene Getreide samt den ebenfalls ausgeschiedenen gröberen Staubteilchen füllt den Sammeltrichter 7 und wird mittels der Zellenradschleuse 8 aus ihm ausgetragen.

Bei Ausfall oder Blockade der Zellenradschleuse 8 kann es vorkommen, daß der Gut-Grobstaub-Haufen im Sammeltrichter 7 des Rezipienten 2 auf eine Höhe anwächst, der zufolge beim Nach-oben-Schwenken von Ausleger und Förderleitung 11 der Prallkopf 15 und eventuell auch die Förderleitung 11 mit besagtem Haufen zusanmenstoßen würde und beschädigt werden könnte. Dadurch aber, daß der Prallkopf 15 relativ zur Förderleitung 11 nach oben schwenkbar an letzterer gelagert ist, dringt in so einem Fall der unten offene Prallkopf 15 zunächst ein gewisses Stück in den Guthaufen ein, bis der wachsende Widerstand ihn an einer Weiterbewegung hindert, während die Förderleitung 11 gemeinsam mit dem Ausleger - unter Ausnutzung der Schwenkbeweglichkeit des Prallkopfes 15 - ungehindert im Rahmen ihres Arbeitsbereiches nach oben schwenken kann. Auf diese Weise werden schädliche Kollisionen zwischen Förderleitung 11 sowie Prallkopf 15 einerseits und Guthaufen im Sammeltrichter 7 andererseits zuverlässig vermieden.

Zum technischen Fortschritt wird ausgeführt:

Durch die erfindungsgemäße Anwendung und Ausgestaltung eines Prallkopfes am abgabeseitigen Ende der Förderleitung wird das Gut mit einem geringen aerodynamischen Verlustbeiwert und ohne Bilden von Spritzkorn in den Rezipienten eingebracht; die gemeinsam mit der Förderleitung sich bewegende Prallwand des Prallkopfes befindet sich dadurch erstens stets in der für das Abbremsen des Gutes günstigsten Stellung und kann zweitens größenmäßig erheblich kleiner bemessen werden als der Prallschild bei der herkömmlichen Anordnung, was den weiteren Vorteil hat, daß sich im Rezipienten ein größtmöglicher freier Steigschachtquerschnitt ergibt, der wiederum eine unter der Schwebegeschwindigkeit der gröberen Staubteilchen liegende Steiggeschwindigkeit und damit ein optimales Vorabscheiden der Grobstäube garantiert. Weitere Vorteile sind die durch die Relativbeweglichkeit zwischen Prallkopf und Förderleitung gewonnene Einsparung sowohl an Bauhöhe als auch an Saughöhe und das Vermeiden von Beschädigungen beim Aufsetzen des Prallkopfes auf einem im Sammeltrichter evtl. bis in seinen Schwenkbereich angewachsenen Guthaufen.

**Patentansprüche**

1. Saugheber mit einer schwenkbeweglichen Förderleitung (11), in der das Gut von einer Aufnahmevorrichtun mittels eines Saugluftstromes zu einem Rezipienten (2) transportiert wird, der Gut und Förderluft nach erfolgtem Transport voneinander scheidet, wobei die Förderleitung direkt in den Rezipienten mündet und vor ihrer Austrittsöffnung in diesem eine Prallfläche vorgesehen ist, die den gesamten Schwenkbereich der Austrittsöffnung abdeckt, dadurch gekennzeichnet, daß als Prallfläche im Rezipienten (2) ein kastenförmiger Prallkopf (15) an die Förderleitung (11) angesetzt und mit ihr (11) beweglich ist.

2. Saugheber nach Anspruch 1, dadurch gekennzeichnet, dan der Prallkopf (15) aus zwei in Richtung der Förderleitung (11) verlaufenden Längswänden (16, 17) und einer quer zu dieser (11) sich erstreckenden, die eigentliche Prallfläche bildenden Querwand (18) sowie einem Satteldach (19) besteht, unten offen ist und an einer Seite von einer quer zur Förderleitung (11) gerichteten und mit ihr verbundenen Wand (20) abgedeckt ist, durch die hindurch die Förderleitung (11) einmündet.

3. Saugheber nach Anspruch 2, dadurch gekennzeichnet, daß der Prallkopf (15) in Richtung des Förderstromes diffusorartig erweitert ist.

4. Saugheber nach Anspruch 2, dadurch gekennzeichnet, daß die als Prallfläche dienende Querwand (18) des Prallkopfes (15) auswechselbar angeordnet ist und seine beiden Längswände (16, 17) mit einem Verschleißschutz (22) versehen sind.

5. Saugheber nach einem der Ansprüche 1 bis 4, dadurch gekennzeichnet, daß der Prallkopf (15) auf einer an der Förderleitung (11) gelagerten Achse (23) angeordnet und nach oben schwenkbeweglich ist und daß an der Förderleitung (11) ein Widerlager (20) angebracht ist, welches seine (15) Bewegung in der Gegenrichtung sperrt.

6. Saugheber nach Anspruch 5, dadurch gekennzeichnet, daß die Achse (23) unterhalb der Längsachse der Förderleitung (11) angeordnet ist.

## Claims

1. Suction elevator with a swivelling feed pipe (11), in which the material from an uptake device is transported to a receptacle (2) by means of a stream of suction air, which after transport has occurred separates the material and delivery air from each other, the feed pipe leading directly into the receptacle, and in front of its outlet into the latter an impact surface being provided which covers the whole swivelling area of the outlet, characterised in that a box-type impact head (15) is mounted on the feed pipe (11) as an impact surface in the receptacle (2) and is movable with it (11).

2. Suction elevator according to Claim 1, characterised in that the impact head (15) consists of two longitudinal walls (16, 17) running in the direction of the feed pipe (11) and a transverse wall (18) stretching at right angles to the latter (11) forming the actual impact surface and a saddle roof (19), is open underneath and covered at one side by a wall (20) at right angles to and connected to the feed pipe (11), through which the feed pipe (11) leads in.

3. Suction elevator according to Claim 2, characterised in that the impact head (15) is enlarged like a diffuser in the direction of the delivery steam.

4. Suction elevator according to Claim 2, characterised in that the transverse wall (18) of the impact head (15), which serves as the impact surface, is arranged so as to be replaceable and its two longitudinal walls (16,17) are provided with a protection against wear and tear (22).

5. Suction elevator according to one of Claims 1 to 4, characterised in that the impact head (15) is arranged on an axle (23) mounted on the feed pipe (11) and can be swivelled upwards, and that an abutment (20) is attached to the feed pipe (11), which blocks (15) its movement in the opposite direction.

6. Suction elevator according to Claim 5, characterised in that the axle (23) is arranged underneath the longitudinal axis of the feed pipe (11).

## Revendications

1. Elévateur à succion comportant un conduit de transport (11) pivotant dans lequel le produit est transporté par un dispositif de réception, au moyen d'un courant d'air d'aspiration, vers un récipient (2) qui, après transport, sépare le produit de l'air de transport, le conduit de transport débouchant directement dans le récipient et étant pourvu, avant son ouverture de sortie dans celui-ci, d'une surface de rebondissement qui couvre la totalité de la plage de pivotement de l'ouverture de sortie, caractérisé en ce qu'il est prévu dans le récipient (2), comme surface de rebondissement, une tête de rebondissement (15) en forme de caisse placée sur le conduit de transport (11) et se déplaçant avec celui-ci (11).

2. Elévateur à succion selon la revendication 1, caractérisé en ce que la tête de rebondissement (15) est constituée de deux parois longitudinales (16, 17) s'étendant dans la direction du conduit de transport (11), et d'une paroi transversale (18), transversale au conduit de transport (11) et formant la surface de rebondissement proprement dite, ainsi que d'un toit à deux versants (19), en ce que la tête de rebondissement (15) est ouverte vers le bas et en ce qu'elle est recouverte d'un côté, par une paroi (20) transversale au conduit de transport (11) et assemblée à celui-ci, à travers laquelle débouche le conduit de transport (11).

3. Elévateur à succion selon la revendication 2, caractérisé en ce que la tête de rebondissement (15) est élargie à la manière d'un diffuseur dans le sens du courant de transport.

4. Elévateur à succion selon la revendication 2, caractérisé en ce que la paroi transversale (18) servant de surface de rebondissement, de la tête de rebondissement (15) est interchangeable et en ce que ses deux parois longitudinales (16, 17) sont pourvues d'une protection anti-usure (22).

5. Elévateur à succion selon l'une des revendications 1 à 4, caractérisé en ce que la tête de rebondissement (15) est placée sur un axe (23) monté sur le conduit de transport (11), et peut pivoter vers le haut, et en ce qu'il est fixé sur le conduit de transport (11) une butée (20) qui bloque le déplacement de la tête (15) dans le sens inverse.

6. Elévateur à succion selon la revendication 5, caractérisé en ce que l'axe (23) est situé au-dessous de l'axe longitudinal du conduit de transport (11).

0 185 273

Fig.1

Fig.2

Fig. 3

Fig. 4